(19) Europäisches Patentamt
European Patent Office
Office européen des brevets

(11) Publication number: **0 432 888 A2**

(12) **EUROPEAN PATENT APPLICATION**

(21) Application number: **90311875.0**

(22) Date of filing: **30.10.90**

(51) Int. Cl.5: **C08L 59/02**, C08L 71/02, C08L 75/00, C08K 5/10

(30) Priority: **02.11.89 US 430300**

(43) Date of publication of application: **19.06.91 Bulletin 91/25**

(84) Designated Contracting States: **AT BE CH DE DK ES FR GB GR IT LI LU NL SE**

(71) Applicant: **HOECHST CELANESE CORPORATION**
**Route 202-206 North**
**Somerville, New Jersey(US)**

(72) Inventor: **Kusumgar, Rajal M.**
**40 Laurel Avenue**
**Livingston, New Jersey(US)**

(74) Representative: **De Minvielle-Devaux, Ian Benedict Peter et al**
**CARPMAELS & RANSFORD 43, Bloomsbury Square**
**London WC1A 2RA(GB)**

(54) **Impact resistant polyacetal compositions exhibiting excellent antistaticity.**

(57) A high impact resistant polyacetal resin composition which further has excellent antistatic properties comprises (a) a polyacetal comprising at least 50% oxymethylene units, (b) a low molecular weight elastomeric polyester- or polyether-based polyurethane, and (c) an antistatic agent comprising a polyhydric alcohol fatty acid ester which contains a hydroxyl group and a polyethylene glycol.

EP 0 432 888 A2

# IMPACT RESISTANT POLYACETAL COMPOSITION EXHIBITING EXCELLENT ANTISTATICITY

## FIELD OF THE INVENTION

The present invention relates to a polyacetal resin composition having excellent antistatic characteristics, good impact strength and moldability.

## BACKGROUND OF THE INVENTION

Polyacetal resin is used broadly for production of functional parts in many industrial fields. Polyacetal resins have excellent mechanical properties, thermal characteristics and durability, which characteristics and properties have enhanced the industrial use of molded polyacetal resin components.

Present state of the art concerns are to enhance and vary the mechanical properties and characteristics of polyacetal resin to meet engineering requirements for a particular use. For example, it is known to improve the impact strength of polyacetal resins by incorporating elastomeric polyurethanes thereto. Commonly assigned U.S. Patent No. 4,665,126 and European Patent Application 167,369, published January 8, 1986 disclose oxymethylene polymer molding compositions having enhanced impact resistance by the incorporation of elastomeric polyurethanes. Similar impact resistant polyacetals are disclosed in U.S. 4,582,869 and European Patent Application 120,711, published October 3, 1988.

The electrical properties of polyacetal resins and articles molded therefrom have also been modified. Polyacetal resins for instance have high surface resistivity, as do many other plastics. Therefore, in some applications, polyacetal resin is undesirable owing to electrostatic charging, i.e., generation of electrostatic noises, surface contamination and adhesion of dusts and the like. One recent proposed application for high impact polyacetal resins is in fuel recovery systems for automobiles. These fuel recovery systems may be required by the EPA and include on-board equipment to prevent gasoline vapors from escaping when vehicles are refueled. For polyacetal resins to be used in such applications, a reduction in the static decay charge of the polyacetal resin is necessary in order to prevent sparks and fire.

There are many antistatic agents marketed as additives to eliminate electrostatic charge buildup in engineering plastics. These commercially available antistatic agents are effective for use in polyacetal resins. However, the utilization of ionic substances in polyacetal resins is not desirable because they cause discoloration and reduce thermal stability. Non-ionic antistatic agents have a much lower tendency toward these adverse effects. Unfortunately, most of the neutral antistatic agents have reduced charge preventing effects. In order to increase their charge preventing property to a practical level, it is necessary to incorporate the neutral antistatic agents in heavy concentrations. Incorporation of heavy concentrations of antistatic agents result in reduced moldability and reduction of the mechanical properties of articles molded from polyacetal resins containing large amounts of these antistatic agents.

Commonly assigned U.S. 4,274,986 discloses a useful antistatic agent for polyacetal resins in which excessive bleeding, excessive lubrication discoloration and instability are reduced without substantial reduction of the antistatic effect. In accordance with the patent, an antistatic composition comprising a polyhydric alcohol fatty acid ester having a hydroxyl group and which is prepared from a fatty acid and a polyhydric alcohol, and a polyethylene glycol is incorporated into polyacetal resins. The particularly useful antistatic agent composition comprises glycerin monostearate and polyethylene glycol. In Example No. 13 of the patent, an acetal copolymer was mixed with 20 wt.% polyurethane (Pellethan 2102-804 manufactured by Kasei-Upjohn) and believed to be formed from a polylactam and 1 wt.% of the combined glycerin monostearate and polyethylene glycol 6000 antistatic agent. The static decay time of the composition was better than a comparative example using a different antistatic agent. However, the static decay time of the polyacetal and polyurethane blend including antistatic agent was not as good as the same polyacetal resin containing the antistatic agent but without polyurethane.

## SUMMARY OF THE INVENTION

It has now been found that the addition of an elastomeric (polyester or polyether) polyurethane to oxymethylene polymers not only improves the impact strength of the oxymethylene polymer, but also greatly reduces the static decay time of the polymer. It is believed that the melt viscosity of the polyurethane is important in achieving the improved antistatic properties. Thus, relatively less viscous polyurethanes are added to the polyacetal to improve impact and reduce static charge. The addition of an antistatic agent such as that disclosed in U.S. 4,274,986 to the polyurethane-impact modified polyacetal

copolymer further reduces the static decay time of the impact modified polyacetal without reducing the impact properties.

DETAILED DFSCRIPTION OF THE INVENTION OXYMETHYLENE POLYMER

The oxymethylene polymer used in the molding composition of the present invention is well known in the art. The polymers are characterized as having recurring oxymethylene groups or units, i.e., $-CH_2O-$. The term oxymethylene polymer as used herein is intended to include any oxymethylene polymer having $-CH_2O-$ groups comprising at least about 50 percent of the recurring units, for example, homopolymer, copolymers, terpolymers and the like.

Typically, the homopolymers are prepared by the polymerization of anhydrous formaldehyde or by the polymerization of trioxane which is a cyclic trimer of formaldehyde. For example, high molecular weight polyoxymethylenes have been prepared by polymerizing trioxane in the presence of certain fluoride catalysts such as antimony fluoride and may also be prepared in high yields and at rapid reaction rates by the use of catalysts comprising boron fluoride coordinate complexes with organic compounds. The homopolymers are usually stabilized against thermal degradation by end-capping or the incorporation therein of stabilizer compounds such as described in U.S. Patent No. 3,133,896 to Dolce and Berardinelli.

Oxymethylene polymers that are particularly adapted for use in the antistatic molding compositions of the present invention are oxymethylene copolymers, which may be prepared as described in U.S. Patent No. 3,027,352 of Walling et al by copolymerizing, for example, trioxane with any of various cyclic ethers having at least two adjacent carbon atoms, e.g., ethylene oxide, dioxolane, and the like.

Especially suitable oxymethylene copolymers which may be used in the antistatic molding compositions of the present invention usually possess a relatively high level of polymer crystallinity, i.e., about 70 to 80 percent. These preferred oxymethylene copolymers have repeating units which consist essentially of (a) $-OCH_2-$ groups interspersed with (b) groups represented by the general formula:

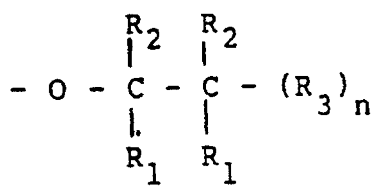

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and haloalkyl-substituted methylene, and lower alkyl and haloalkyl-substituted oxymethylene radicals, and n is an integer from zero to three inclusive. Each lower alkyl radical preferably has from one to two carbon atoms, inclusive.

The $-OCH_2-$ units of (a) constitute from about 85 to about 99.9 percent of the recurring units. The units of (b) may be incorporated into the copolymer during the step of copolymerization to produce the copolymer by the opening of the ring of a cyclic ether having adjacent carbon atoms, i.e., by the breaking of an oxygen-to-carbon linkage.

Copolymers of the desired structure may be prepared by polymerizing trioxane together with from about 0.1 to about 15 mole percent of a cyclic ether having at least two adjacent carbon atoms, preferably in the presence of a catalyst such as a Lewis acid (e.g, $BF_3$, $PF_5$, and the like) or other acids (e.g., $HClO_4$, 1% $H_2SO_4$, and the like).

In general, the cyclic ethers employed in making the preferred oxymethylene copolymers are those represented by the general formula:

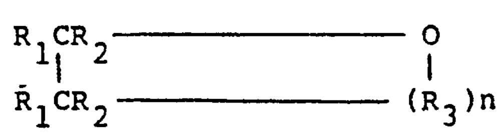

wherein each $R_1$ and $R_2$ is selected from the group consisting of hydrogen, lower alkyl and halogen-substituted lower alkyl radicals, and each $R_3$ is selected from the group consisting of methylene,

oxymethylene, lower alkyl and haloalkyl-substituted methylene, and lower alkyl and haloalkyl-substituted oxymethylene radicals, and n is an integer from zero to three inclusive. Each lower alkyl radical preferably has from one to two carbon atoms, inclusive.

The preferred cyclic ethers used in the preparation of the preferred oxymethylene copolymers are ethylene oxide and 1,3-dioxolane, which may be represented by the formula:

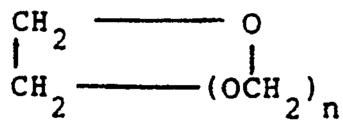

wherein n represents an integer from zero to two, inclusive. Other cyclic ethers that may be employed are 1,3-dioxane, trimethylene oxide, 1,2-propylene oxide, 1,2-butylene oxide, 1,3-butylene oxide and 2,2-di-(chloromethyl)-1,3-propylene oxide.

The preferred catalyst used in preparing the desired oxymethylene copolymers is the aforementioned boron trifluoride as discussed in the previously identified Walling et al patent. Reference is made to this patent for further information concerning the polymerization conditions, amount of catalyst employed, and the like.

The oxymethylene copolymers produced from the preferred cyclic ethers have a structure composed substantially of oxymethylene and oxyethylene groups in a ratio of from about 6 to 1 to about 1000 to 1.

The oxymethylene copolymers that are preferably present in the molding compositions of the present invention are thermoplastic materials having a melting point of at least 150° C, and normally are millable or processable at a temperature of from about 180° C to about 200° C. They have a number average molecular weight of at least 10,000. The preferred oxymethylene copolymers have an inherent viscosity of at least 1.0 (measured at 60° C in a 0.1 weight percent solution in p-chlorophenol containing 2 weight percent of alphapinene).

The oxymethylene copolymer component of the molding composition of this invention preferably is an oxymethylene copolymer that has been preliminarily stabilized to a substantial degree. Such stabilizing technique may take the form of stabilization by degradation of the molecular ends of the polymer chain to a point where a relatively stable carbon-to-carbon linkage exists at each end. For example, such degradation may be effected by either solution hydrolysis (hereinafter "SH") or melt hydrolysis (hereinafter "MH") to remove unstable groups. These processes degrade the hemiacetal end groups in the copolymer chain. Both processes are known to those skilled in the art and are in commercial practice. A useful solution hydrolysis process is disclosed in U.S. Pat. 3,179,948 and a useful melt hydrolysis process is disclosed in U.S. Pat. 3,318,848. If desired, the oxymethylene copolymer may be endcapped by techniques known to those skilled in the art. A preferred end-capping technique is accomplished by acetylation with acetic anhydride in the presence of sodium acetate catalyst.

A preferred oxymethylene copolymer is commercially available from Hoechst Celanese Corporation under the designation CELCON® acetal copolymer. Preferred are acetal copolymers having a melt index of at least about 5.0 g/10 min. to about 27.0 g/10 min. Especially preferred is CELCON® M90 which has a melt index of about 9.0g/10 min. when tested in accordance with ASTM D1238-82.

The melt index is determined by heating a sample of a polymer in a standard cylinder to a standard temperature of 190° C and forcing it under a standard load of 2.160 kg. through a standard orifice of 0.0825 inch diameter and 0.315 inch long for a standard period and weighing the polymer passing through the orifice during this period. The results are recorded in grams per 10 minutes.

The melt index (10X) is generally used when melt index values are low and is determined in an identical manner except that the standard load is increased 10 fold to 21.60 kg.

Oxymethylene terpolymers may also be used and are prepared, for example, by reacting trioxane and a cyclic ether and/or cyclic acetal such as in the preparation of the oxymethylene copolymer, with a third monomer which is a bifunctional compound such as a diglycide of the formula:

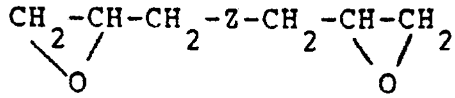

wherein Z represents a carbon-to-carbon bond, an oxygen atom, an oxy-alkoxy of 1 to 8 carbon atoms, preferably 2 to 4 carbon atoms, and which may be an oxycycloalkoxy of 4 to 8 carbon atoms, or an oxy-poly(lower alkoxy), preferably of 2 to 4 recurring groups each with 1 to 2 carbon atoms, for example, ethylene diglycide, diglycidyl ether and diethers of 2 mols of glycide and 1 mol of formaldehyde, dioxane or trioxane, or diethers of 2 mols of glycide and 1 mol of an aliphatic diol with 2 to 8 carbon atoms, advantageously 2 to 4 carbon atoms, or a cycloaliphatic diol with 4 to 8 carbon atoms.

Examples of suitable bifunctional compounds include the diglycidyl ethers of ethylene glycol, 1,4-butanediol, 1,3-butanediol, cyclobutane-1,3-diol, 1,2-propane-diol, cyclohexane-1, 4-diol and 2-dimethyl-4-dimethyl-cyclobutane-1,3-diol, with butanediol diglycidyl ethers being most preferred.

Generally, in preparing the terpolymer of trioxane, cyclic ether and/or cyclic acetal and at least one bifunctional diglycide compound, a ratio of from 99.89 to 89.0 weight percent trioxane, 0.1 to 10 weight percent of the cyclic ether and/or cyclic acetal, and 0.01 to 1 weight percent of the bifunctional compound is preferred, with the percentage figures being based on the total weight of monomers used in forming the terpolymer. The terpolymers thus obtained are characterized as being essentially white and having a particularly good extrudability.

The polymerization of the terpolymer may be carried out according to known methods, that is in substance, solution or suspension, while using the above-mentioned quantitative proportions of the termonomers.

A preferred oxymethylene terpolymer is commercially available from Hoechst Celanese Corporation under the designation U10, and is a butanediol diglycidyl ether/ethylene oxide/trioxane terpolymer containing about 0.05 weight percent, 2.0 weight percent, and 97.95 weight percent of each component, respectively.

## ELASTOMERIC POLYURETHANE

Elastomeric polyurethanes which are suitable for improving the impact strength of the oxymethylene polymer composition are those which have been prepared from polyester polyols, polyether polyols such as polyethylene-glycol ethers, polypropylene-glycol ethers, polytetramethylene-glycol ethers or polyacetals having free hydroxyl end groups and polyisocyanates, in particular diisocyanates, using chain-extending agents such as low molecular weight polyols, preferably glycols. Examples of useful thermoplastic polyurethanes can be found in previously-mentioned U.S. 4,665,126 and published European Patent Application 167,369, both of which are herein incorporated by reference.

The polymeric polyols and polyol extenders which can be used are those conventionally employed in the art for the preparation of such elastomers. The polymeric polyols are preferably polymeric diols which advantageously have molecular weights in the range of 400 to 4000 and preferably within the range of about 500 to about 3000. Illustrative of polymeric diols are polyester diols and polyether diols and mixtures thereof having molecular weights within the above range. The polyester diols include the essentially linear polymeric diols which are obtained by esterification of an aliphatic or aromatic dibasic acid or anhydride with a glycol. Preferably the glycol is employed in excess of the stoichiometric proportion with respect to the acid or anhydride in order to ensure that the polyesters are hydroxyl-terminated. Representative dicarboxylic acids (or their anhydrides) employed in the preparation of the polyester diols are adipic, succinic, pimelic, suberic, azelaic, sebacic, terephthalic, phthalic, and the like acids or their anhydrides or mixtures of two or more of said acids or anhydrides. Adipic acid is the preferred acid. Representative glycols employed in the preparation of the polyester diols are the straight chain aliphatic glycols containing from 2 to 10 carbon atoms, inclusive, such as ethylene glycol, propane-1,3-diol, butane-1,4-diol, 2-butene-1,4-diol, hexane-1,6-diol, octane-1,8-diol, decane-1,10-diol, and the like, or mixtures of two or more such glycols.

The polyether polyols employed in the preparation of the polyurethane elastomers of the invention include the polyether glycols having molecular weights in the above defined range and prepared by reacting ethylene oxide, propylene oxide, butylene oxide, or mixtures thereof with water or with diols such as ethylene glycol, 1,2-propylene glycol, 1,3-propanediol 1,4-butanediol, 2,3-butanediol, 1,5-pentanediol, 1,2-hexanediol, diethanolamine, resorcinol, catechol, bis(p-hydroxyphenyl) methane, diethylene glycol, dipropylene glycol, and the like.

The extenders which are employed in preparing the polyurethane elastomers of the invention can be any of the diol extenders commonly employed in the art. Illustrative of diol extenders are aliphatic diols, advantageously containing from 2 to 6 carbon atoms, inclusive, such as ethylene glycol, 1,3-propylene glycol, 1,2-propylene glycol, 1,4-butanediol, 1,2-hexanediol, neopentyl glycol, and the like; and dihydroxyalkylated aromatic compounds such as the bis(2-hydroxyethyl)ethers of hydroquinone and resorcinol; p-xylene-a,a'-diol; the bis(2-hydroxyethyl)ether of p-xylene-a,a'-diol; m-xylene-a,a'-diol and the bis(2-hydroxyethyl)ether thereof.

The organic diisocyanate employed in the process of the invention can be any of those commonly employed in the preparation of polyurethane elastomers. Illustrative of said diisocyanates are 2,4-tolylenediisocyanate, 2,6-tolylene diisocyanate, 4,4'-methylenebis(phenyl isocyanate), 3,3'-dimethyl-4,4'-diisocyanatodiphenyl, 3,3'-dimethoxy-4,4'-diisocyanatodiphenyl, 3,3'-dichloro-4,4'-diisocyanatodiphenyl, $\beta,\beta'$-diisocyanato-1,4-diethylbenzene, 1,5-naphthalene diisocyanate, 1,4-phenylene diisocyanate, and the like, including mixtures of two or more of the above diisocyanates. The preferred diisocyanate is 4,4'-methylenebis(phenyl isocyanate).

Regardless of the particular polyurethane reaction method which is chosen, the hydroxyl components (i.e., the polyester or polyether polyol and the polyol extender) and the diisocyanate are used such that the overall ratio of isocyanate equivalents or groups to total hydroxyl equivalents or groups is within the range of about 1:1 to about 1.08:1.0, and preferably is within the range of about 1.02:1.0 to about 1.07:1.0. The most preferred ratio of isocyanate (NCO) groups to total hydroxyl (OH) groups is within the range of from about 1.03:1.0 to about 1.06:1.0.

The term equivalent(s) as used with respect to the polyurethane preparation in the present specification and claims is based on the hydroxyl and isocyanate groups of the reactants.

The polyurethanes which are useful in the present invention can be prepared by processes which are conventional in the art for the synthesis of thermoplastic polyurethanes. Illustrative of such processes are those described in U.S. Patent Nos. 3,493,364; 4,169,196; 4,202,957; and 3,642,964. Such processes include the one-shot procedure in which all of the reactants are brought together simultaneously, and the prepolymer procedure in which the isocyanate is reacted with the polyester or polyether glycol in a first-step and the isocyanate-terminated prepolymer so produced is subsequently reacted with the diol extender. The one-shot process also includes the process in which the diisocyanate has been converted to a quasiprepolymer by reaction with a minor amount (i.e., less than about 10% on an equivalent basis) of the glycol prior to carrying out the polyurethane-forming reaction.

The elastomeric polyurethanes just previously described can be formulated to have a wide range of molecular weights. Typically, polyurethanes can be produced which have high molecular weights and correspondingly low melt index (10X) ranging from about 2 to 10 g/10 min. Unfortunately, elastomeric polyurethanes of high molecular weight and low melt index (10X) are difficult to uniformly disperse throughout the oxymethylene polymer matrix. The result is that the polyurethane is not uniformly present at the surface of molded articles and this non-uniformity adversely effects the surface properties of the molded article including the static properties thereof.

Accordingly, it is known to use a polyurethane which has a relatively low molecular weight and, thus, high melt index (10X) to improve the dispersion of the polyurethane throughout the oxymethylene polymer matrix and yield impact strength improvement. It has been discovered that these relatively low molecular weight polyurethanes also provide improved antistatic properties when added to oxymethylene resins. Thus, the melt index (10X) of the elastomeric polyurethanes used in the present invention is generally at least about 25 g/10 min. and typically ranges from about 30-60 g/10 min. These relatively lower molecular weight elastomeric polyurethanes can be readily dispersed within the oxymethylene polymer matrix and typically will be contained in the matrix in a droplet size of about 0.01 to 0.9, and, more preferably, no greater than about 0.5 micron. This smaller size droplet within the matrix allows the polyurethane to be uniformly dispersed within the oxymethylene polymer including uniformly dispersed along the surface of the articles which are molded from the composition. The uniform dispersion of the polyurethane at the surface of the molded articles is believed to result in the drastic reduction in static charge build up which has been observed at the surface of the molded oxymethylene polymer compositions of this invention.

ANTISTATIC AGENT

The antistatic agent useful in this invention comprises a polyhydric alcohol fatty acid ester having a hydroxyl group, which is prepared from a fatty acid and a polyhydric alcohol, and a polyethylene glycol. The antistatic agent is described in aforementioned U.S. 4,274,986 herein incorporated by reference.

By the term, a polyhydric alcohol fatty acid ester having a hydroxyl group is meant alcohol fatty acid esters having at least one hydroxyl group and at least one ester group, obtained by reaction between natural or synthetic fatty acids such as lauric acid, myristic acid, palmitic acid, stearic acid, arachic acid, behenic acid, oleic acid and hydroxylstearic acid and polyhydric alcohols such as glycerin, pentaerythritol, diglycerin and sorbitol. All of these esters are commercially available antistatic agents. In general, the sole use of monoglycerides of stearic acid, palmitic acid and the like is not preferred because conspicuous solid

bleeding results. When these monoglycerides are used in combination with polyethylene glycols according to the present invention, bleeding is effectively controlled without a detrimental effect on the monoglyceride's antistatic property. Monoglycerides are advantageously employed because monoglycerides can be purified by distillation with resultant availability of a highly pure product.

Polyethylene glycols include liquid products having relatively low molecular weight as well as solid products having high molecular weights. They have little antistatic properties and thus none of them can be used singly as antistatic agents. However, when they are used in combination with ester type antistatic agents, remarkably improved antistatic effects are attained by the synergistic action of the two components. In general, the antistatic effect is reduced with increase of the molecular weight of the polyethylene glycol. Accordingly, it is preferred that the molecular weight be no higher than 20,000 more preferably not higher than 10,000. From the viewpoint of antistatic propensity, the lower limit of molecular weight is not critical. However, since a polyethylene glycol having an excessively low molecular weight is easily vaporized, it is preferred that its molecular weight be at least 400. Use of a polyethylene glycol having a molecular weight of at least 1,000 is especially preferred because liquid bleeding is eliminated.

The relative concentration of the two components, the polyethylene glycol and fatty acid ester, in the polyacetal composition influences the composition's antistatic property, surface characteristics, stability, moisture-absorbing property and mechanical properties. Since the required degree of the antistatic property, the allowable range of bleeding and the allowable degree of reduction of physical properties varies depending on the polyacetal composition's intended use, the amounts of these additives is adjusted according to the intended use. In many applications, a sufficient antistatic effect is attained if the fatty acid ester content is at least 0.1% and the total content of the fatty acid ester and polyethylene glycol is at least 1%. However, in some applications, a satisfactory antistatic effect is obtained even if the concentration of these additives are lower. In case of substances that are likely to cause solid bleeding, such as glycerin monostearate, bleeding can be prevented if the concentration of such substance is reduced below 1%, preferably below 0.5%.

## MOLDING COMPOSITION

It is within the ambit of the present invention to use oxymethylene polymers that include, if desired, plasticizers, formaldehyde scavengers, mold lubricants, antioxidants, fillers, colorants, reinforcing agents, light stabilizers, pigments, other stabilizers, and the like, so long as such additives do not materially affect the desired properties including enhancement of impact strength and antistaticity of the resulting molding composition and the articles molded therefrom.

Suitable formaldehyde scavengers include cyanoguanidine, melamines, polyamides, amine-substituted triazines, amidines, ureas, hydroxyl salts of calcium, magnesium, and the like, salts of carboxylic acids, and metal oxides and hydroxides. Cyanoguanidine (CNG) is the preferred formaldehyde scavenger. Suitable mold lubricants include alkylene bisstearamide, long-chain amides, waxes, oils, and polyether glycides. The preferred mold lubricant is commercially available from Glyco Chemical, Inc. under the designation Acrawax C and is alkylene bisstearamide. The preferred antioxidants are hindered bisphenols. Especially preferred is 1,6-hexamethylene bis-(3,5-di-t-butyl-4-hydroxyhydrocinnamate), commercially available from Ciba-Geigy Corp. under the designation Irganox 259.

The molding compositions may suitably be prepared by any conventional procedure that will result in an intimate blend or mixture of the components. Preferably, dry or melt blending procedures and equipment are used. For example, the polyurethane (in the form of pellets, chips, or granules) can be dry mixed with the oxymethylene polymer (in the form of pellets, chips, granules or powder) typically at room temperatures, and the resulting mixture melt blended in any conventional type extrusion equipment, which is heated to a temperature of from about 180°C to about 230°C, and preferably from about 185°C to about 205°C.

Preferably, the polyurethane elastomer and oxymethylene polymer are dried (either alone or together) before being subjected to the intimate blending procedure. The drying can be done in desiccated air having a dew point of about -30°C to -40°C or lower, at a temperature of from about 70°C to about 110°C, and preferably above 80°C. The drying can also be accomplished in a vacuum oven, for example, at a temperature above about 90°C. The drying time will depend primarily on the moisture content, drying temperature, and particular equipment employed, but typically is from about 2 to about 6 hours or more. If the drying is conducted for longer periods of time, such as overnight, the drying temperature should preferably be about 70°C to about 85°C. In general, any conventional drying procedure can be used to reduce the moisture content to below about 0.1 weight percent, based on the total weight of the polyurethane and oxymethylene polymer, preferably below about 0.05 weight percent, and most preferably below about 0.01 weight percent or lower. As is well known to those skilled in the art, water will react with

polyurethanes upon processing the polyurethanes at elevated temperatures.

The composition of the present invention can be prepared by an ordinary mixer such as an ordinary extruder. A well-dispersed composition prepared by using a mixing apparatus having a high capacity, such as a biaxial extruder, is especially preferred because moldability and antistatic property of polyacetals so prepared are especially enhanced when they are prepared in this manner. The biaxial extruder is advantageously employed for incorporating a low-viscosity substance such as mineral oil or lubricants along with the antistatic agent. The polyethylene glycol and fatty acid ester may be preliminary molten and mixed, or they may be incorporated into the polyacetal prior to kneading in an extruder or the like or they may be directly fed in the liquid state into an extruder or the like.

The oxymethylene molding composition resulting from the intimate blending procedure is then comminuted mechanically, for example by chopping, pelletizing or grinding, into granules, pellets, chips, flakes or powders, and processed in the thermoplastic state, for example by injection molding or extrusion molding, into shaped articles, for example, bars, rods, plates, sheets, films, ribbons, tubes and the like.

EXAMPLES 1-3

The physical and electrical properties of several polyacetal compositions were compared. Example 1 is a composition prepared by blending an oxymethylene copolymer, Celcon®, Hoechst Celanese, which has a melt index of about 9.0g/10 min., and 20 wt.% of an elastomeric polyurethane, manufactured by Upjohn, melt index (10X) of 45.0. Example 2 comprises the same blend as Example 1 but further includes an antistatic package comprising 0.9 wt.% polyethylene glycol and 0.35 wt.% glycerin monostearate. Example 3 is the same formulation as in Example 2 except for a different stabilizing package. The compositions in each of Examples 1 to 3 were kneaded by means of a biaxial extruder and injection molded into test samples. The physical properties were determined by standard ASTM methods. The electrical properties were measured by an "Honestometer", Japan, which first applies a voltage to the surface of the molded sample, measures the charge density and measures the time required for 1/2 of the charge to dissipate.

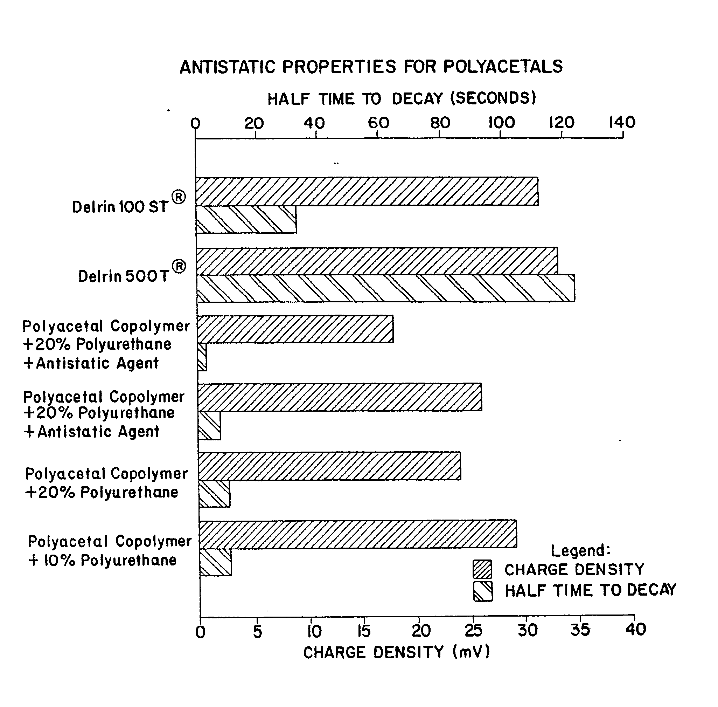

Table 1 sets forth the components present in the antistatic, high impact polyacetal of Examples 2 and 3. Table 2 compares the physical and electrical properties of the compositions of Examples 1-3. Figure 1 graphically represents the antistatic properties of the compositions of Examples 1-3. Figure 1 further graphically illustrates the antistatic properties of additional test samples prepared from the following compositions: (1) the same Celcon® polyacetal and 10% of the polyurethane as in Example 1, (2) Delrin 500T® and (3) Delrin 100ST®, both of which are believed to comprise a polyacetal homopolymer and about 8 wt.% and 30-35 wt.% polyurethane, respectively manufactured by Dupont.

As can be seen from Table 2, the addition of the antistatic agent to the blend of polyacetal and polyurethane did not greatly reduce the physical properties of the control blend (Example 1). Importantly, the static decay time was drastically reduced by addition of the antistatic agent. As shown in Figure 1, the blends of polyacetal and high melt index polyurethane, had greatly reduced static decay half time relative to the Delrin® samples. Moreover, the addition of the antistatic agent further and substantially reduced the static decay time of the high impact polyacetal copolymer formed with the high melt index polyurethane.

TABLE 1

FORMULATIONS FOR ANTISTATIC POLYACETAL

| | EX. 2 | EX. 3 |
|---|---|---|
| Polyacetal copolymer | 77.71 | 77.28 |
| Polyurethane | 20.00 | 20.00 |
| Carbowax Flake | 0.90 | 0.90 |
| GMS-450 | 0.35 | 0.35 |
| Balance[2] | 1.04 | 1.47 |

1. Polyacetal terpolymer
2. Stabilizer package

TABLE 2

PROPERTIES OF ANTISTATIC POLYACETAL

| | EX. 1 | EX. 2 | EX. 3 |
|---|---|---|---|
| Melt Index 190°C/2.16Kg | 8.5 | 9.7 | 11.2 |
| Tensile Strength, PSI | 5800 | 5300 | 5800 |
| Elongation, % | 275 | 370 | 116 |
| Notched Izod ft-lb/in Notch | 2.4 | 2.5 | 2.0 |
| Static Decay, Sec. | 15 | 1 | 5 |
| Color, b value | 5 | 5 | 3 |

## Claims

1. A polyacetal resin composition comprising:
   A. an oxymethylene polymer comprising at least 50% recurring $-OCH_2-$ groups,
   B. an elastomeric polyester- or polyether-based polyurethane having a melt index (10X) of at least 25.0g/10 min. in an amount sufficient to improve the impact strength of said oxymethylene copolymer, and
   C. an effective amount of an antistatic agent comprising a mixture of a polyhydric alcohol fatty acid ester including a hydroxy group and a polyethylene glycol.

2. The polyacetal resin composition of claim 1, wherein said polyurethane is added in amounts of from about 5 to about 50 wt % based on the composition.

3. The polyacetal resin composition of claim 2, wherein said polyurethane is present in amounts of from about 10 to about 50 wt % based on the composition.

4. The polyacetal resin composition of claim 2, wherein said polyurethane is present in an amount of from about 10 to about 20% by weight based on the total weight of the composition.

5. The polyacetal resin composition of claim 1, wherein said oxymethylene polymer comprises (a) from about 85 to about 99.9 mol % of recurring $-OCH_2-$ groups interspersed with (b) from about 0.1 to about 15 mol % groups represented by the formula:

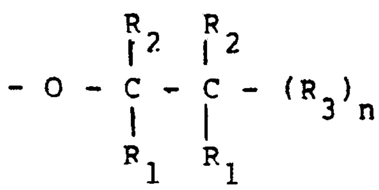

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and haloalkyl-substituted methylene, and lower alkyl and haloalkyl-substituted oxymethylene radicals, and n is an integer from zero to three inclusive.

6. The polyacetal resin composition of claim 5, wherein said (b) recurring units comprise ethylene oxide units.

7. The polyacetal resin composition of claim 6, wherein said ethylene oxide is present in amounts of about 2 mol %.

8. The polyacetal resin composition of claim 5, wherein said oxymethylene polymer has a melt index of about 9.0 g./10 min.

9. The polyacetal resin composition of claim 1, wherein the polyhydric alcohol fatty acid ester is selected from the group consisting of monoglyceride of stearic acid, palmitic acid, myristic acid and lauric acid and the polyethylene glycol is one having a molecular weight in the range of between about 1,000 and 20,000.

10. The polyacetal resin composition of claim 1, wherein said elastomeric polyurethane is formed by the polymerization of (1) a polyester obtained by the esterification of an aliphatic or aromatic dicarboxylic acid with an aliphatic glycol containing from 2 to 10 carbon atoms, or (2) a polyether glycol, with a diol extender comprising aliphatic or aromatic diols and an organic diisocyanate.

11. The polyacetal resin composition of claim 10, wherein said polyester and polyether have a molecular weight in the range of from about 400 to 4,000.

12. A polyacetal resin composition comprising:
A. an oxymethylene copolymer comprising (a) about 85 to about 99.9 mol % of recurring $-OCH_2-$ groups interspersed with (b) about 0.1 to about 15 mol % of groups represented by the formula:

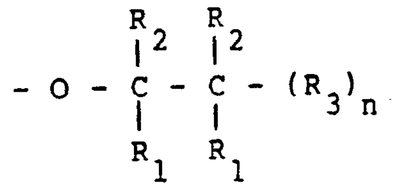

wherein each $R_1$ and $R_2$ is selected from the group consisting of hydrogen, lower alkyl and halogen-substituted lower alkyl radicals, each $R_3$ is selected from the group consisting of methylene, oxymethylene, lower alkyl and haloalkyl-substituted methylene, and lower alkyl and haloalkyl-substituted oxymethylene radicals, and n is an integer from zero to three inclusive,

B. about 5 to about 50 wt % based on the composition of an elastomeric polyester- or polyether-based polyurethane having a melt index (10X) of at least 25 g/10 min. and sufficient to improve the impact strength of said oxymethylene copolymer, and

C. an effective amount of an antistatic agent comprising a mixture of a polyhydric alcohol fatty acid ester including a hydroxy group and a polyethylene glycol.

**13.** The polyacetal resin composition of claim 12 comprising the feature of any of Claims 3, 4, 6, 7, 8 or 9.

**14.** The polyacetal resin composition of claim 12, wherein said elastomeric polyurethane is formed by the polymerization of (1) a polyester obtained by the esterification of an aliphatic or aromatic dicarboxylic acid with an aliphatic glycol containing from 2 to 10 carbon atoms, or (2) a polyether glycol, with a diol extender comprising aliphatic or aromatic diols and an organic diisocyanate.

**15.** The polyacetal resin composition of claim 19, wherein said polyester and polyether have a molecular weight in the range of from about 400 to 4,000.

ANTISTATIC PROPERTIES FOR POLYACETALS